# FASCICULE DE BREVET EUROPEEN

(11) **EP 1 755 867 B1**
(45) Date de publication et mention de la délivrance du brevet: **02.07.2008**
(21) Numéro de dépôt: 05758189.4
(22) Date de dépôt: 19.04.2005
(51) Int. Cl.: B29C 70/08, B29C 70/34, F02K 1/64

(54) **PROCEDE DE FABRICATION D'ELEMENTS, TELS QUE DES AILETTES POUR CASCADES D'INVERSEUR DE POUSSEE, PAR MOULAGE D'UN MATERIAU COMPOSITE**
VERFAHREN ZUR HERSTELLUNG VON ELEMENTEN WIE SCHUBUMKEHR-KASKADENSCHAUFELN MITTELS FORMUNG EINES VERBUNDWERKSTOFFES
METHOD FOR PRODUCTION OF ELEMENTS SUCH AS THRUST-REVERSER CASCADE VANES BY MOULDING OF A COMPOSITE MATERIAL

(30) Priorité: 27.04.2004 FR 0404442
(43) Date de publication de la demande: 28.02.2007
(73) Titulaire: AIRCELLE, 76700 Gonfreville l'Orcher (FR)
(72) Inventeur: D'INCA, Alain, F-91640 Briis s/Forges (FR); MOREL, Caroline, 78000 VERSAILLES (FR); JUMEL, Jean-Pierre, F-78290 Croissy sur Seine (FR)
(74) Mandataire: Sauvage, Renée
(86) Numéro de dépôt international: PCT/FR2005/000942
(87) Numéro de publication internationale: WO 2005/110723

(56) Documents cités:
- EP-A- 0 219 889
- EP-A- 0 916 477
- GB-A- 2 039 821
- US-A- 4 596 621
- US-A- 5 342 679
- US-A- 5 576 079

## Description

La présente invention a pour objet un procédé de fabrication d'une série d'éléments juxtaposés et séparés les uns des autres sur au moins une partie de leur longueur, ces éléments pouvant être, par exemple, les ailettes ou aubes d'une cascade pour inverseur de poussée ou celles d'une roue, ou portion de roue, de compresseur pour moteur d'aéronef.

A l'heure actuelle, les cascades pour inverseurs sont soit en métal usiné et donc relativement lourdes, ce qui est un inconvénient majeur dans le domaine de l'aéronautique, soit fabriquées en matériau composite, plus léger, mais au prix de techniques de drapage non satisfaisantes. En effet, ces techniques ne permettent pas d'obtenir des profils aérodynamiques réellement évolutifs et elles nécessitent de nombreuses opérations manuelles qui conduisent à un coût de production élevé.

Une telle technique est divulguée dans US-A-4 596 621 qui décrit un procédé de fabrication d'une cascade pour inverseur de poussée, cascade qui incorpore des fibres continues pré-imprégnées. De son côté, GB-A-12039 821 divulgue un procédé de fabrication d'articles à partir de matières plastiques renforcées par des fibres.

La fabrication de tels éléments par moulage par compression de matériaux composites, du type de ceux énoncés plus loin à propos du matériau de remplissage utilisé dans le prémix selon l'invention, constituerait une solution économique et adaptée à réaliser des profils aérodynamiques réellement évolutifs, mais les tentatives faites jusqu'ici n'ont pas été satisfaisantes, car elles débouchent sur des produits n'offrant pas la tenue mécanique voulue.

Or, il a maintenant été découvert un procédé selon la revendication 1 remédiant à cet inconvénient.

On fabrique ainsi des éléments discontinus à partir d'un prémix continu.

L'expression "sensiblement homogène" utilisée dans la présente description et les revendications n'exclut pas que, de place en place, des aménagements particuliers puissent être faits dans le prémix pour tenir compte, par exemple, de différences de géométrie dans les éléments attendus. Les différences d'homogénéité qui en résultent sont, de toute manière, sans commune mesure avec celles que l'on observe, à l'issue du matriçage, entre, d'une part, les parties du produit semi-fini qui constitueront les éléments attendus et, d'autre part, les fonds de maille,.

Le moulage par compression dans un moule à empreintes consiste habituellement à placer de la matière première dans chacune des empreintes ou cavités définies par le moule, à ramollir le matériau par chauffage, et à refermer les deux pièces : la pression exercée contraint le matériau à épouser la forme des cavités et, pour éviter d'avoir à doser exactement la quantité de matière première qui sera strictement nécessaire et suffisante pour remplir chaque cavité, la charge de matière première est faite avec un léger excès et il est prévu, pour la matière excédentaire, des canaux ou passages de fuite, lesquels peuvent assurer en outre la communication entre cavités.

La présence de tels passages résulte en la connexion des éléments moulés par des ponts ou voiles de matière.

Alors que dans la technique classique rappelée ci-dessus, les passages servent essentiellement à permettre à du matériau excédentaire de s'échapper des cavités, au contraire, selon l'invention, c'est essentiellement le matériau excédentaire des passages qui s'échappe vers les cavités. Ainsi le prémix qui se trouve au niveau des passages et qui flue, sert de réservoir complémentaire pour le remplissage des cavités adjacentes. Cependant, le prémix ne flue pas de manière homogène : c'est le matériau de remplissage qui flue, les fibres restant, elles, piégées dans les passages, éventuellement avec du matériau de remplissage résiduel. Ces fibres et le matériau de remplissage résiduel forment, après matriçage, les fonds de maille. A l'issue de l'étape d), on obtient donc un produit semi-fini dans lequel les éléments attendus sont reliés les uns aux autres par lesdits fonds de maille qui pourront ensuite être éliminés par découpe au jet d'eau ou par usinage.

Sous l'effet du matriçage, les fibres de la ou desdites couches de fibres continues unidirectionnelles s'écartent les unes des autres, pour s'adapter à la forme du produit semi-fini, et ce, en se répartissant d'une façon sensiblement régulière, ce qui permet de prévoir, dès la réalisation du prémix, la densité de fibres que l'on trouvera dans les éléments attendus. Il s'ensuit un degré de renforcement prévisible desdits éléments attendus.

En général, on utilisera un prémix dans lequel la ou lesdites couches de fibres continues unidirectionnelles seront chacune constituées de plusieurs nappes superposées de telles fibres orientées dans la même direction et, sous l'effet du matriçage, les fibres d'au moins une desdites nappes seront contraintes de s'intercaler entre les fibres écartées d'une autre desdites nappes. Ainsi, en dépit de l'écartement des fibres sous l'effet du matriçage, il sera conservé une certaine continuité de la juxtaposition parallèle des fibres au prix d'un amincissement de la superposition de nappes, tout se passant comme si les nappes de fibres continues unidirectionnelles s'organisaient pour canaliser le matériau de remplissage tandis qu'il flue.

Dans une première forme d'exécution du procédé selon l'invention, appliqué à la fabrication d'une série d'éléments juxtaposés parallèlement, par exemple des ailettes de cascade pour inverseur, le prémix, utilisé dans l'étape c), incorpore plusieurs couches de fibres continues unidirectionnelles, couches qui font entre elles un angle sensiblement nul, et il est orienté de telle sorte que les fibres desdites couches soient sensiblement parallèles à la grande dimension des cavités de ladite série de cavités.

Dans une seconde forme d'exécution du procédé selon l'invention appliqué à la fabrication d'une série d'éléments rayonnants juxtaposés, par exemple des ailettes de roues de compresseur, le procédé consiste à utiliser un prémix incorporant plusieurs couches de fibres continues unidirectionnelles, au moins certaines desdites couches faisant entre elles un angle tel que, dans l'étape c), il se trouve, au droit de chaque cavité, des fibres s'étendant selon la grande dimension de ladite cavité et appartenant à l'une au moins desdites couches.

Dans une forme d'exécution pratique de l'invention, la ou lesdites couches de fibres unidirectionnelles continues sont réalisées à partir d'une ou plusieurs nappes ayant individuellement une épaisseur comprise entre 1/10 mm et 1 mm.

Le matériau de remplissage peut se présenter sous une forme quelconque, par exemple sous la forme de granulés, de mats, de résine chargée, de fragments issus d'au moins une nappe de fibres unidirectionnelles et pré-imprégnées, ou d'une combinaison de ceux-ci. Les fragments peuvent être issus d'une nappe identique à une nappe constitutive de ladite au moins une couche de fibres continues unidirectionnelles, ou être issus d'une nappe qui diffère de la ou desdites nappes constitutives par sa composition qualitative et/ou quantitative et/ou par son épaisseur.

La résine imprégnant les fibres continues unidirectionnelles est généralement une résine thermodurcissable. Le recours à une résine thermoplastique peut également être envisagé.

En pratique, avant matriçage, le prémix se présente sous la forme d'une plaque ayant une épaisseur sensiblement constante et dont les dimensions, dans le plan perpendiculaire à ladite épaisseur, sont sensiblement égales aux dimensions, dans ce même plan, de la zone de l'outillage définissant l'emprise de la série d'éléments à obtenir.

L'invention étend sa portée, non seulement au procédé de fabrication décrit plus haut, mais encore au produit semi-fini issu selon la revendication 13 de la mise en oeuvre des étapes a, b, c et d dudit procédé. Dans un tel produit semi-fini, les fonds de maille auront généralement une épaisseur comprise entre environ 3/10 mm et 1 mm.

Elle étend en outre sa portée à l'utilisation du procédé selon la revendication 14 pour la fabrication d'une série d'éléments ayant chacun un profil aérodynamique, comme les ailettes de cascade pour inverseur de poussée de moteur d'aéronef et de roues ou portions de roues pour compresseur et aux structures incorporant de tels éléments.

L'invention sera mieux comprise à la lecture de la description suivante faite en référence aux dessins annexés dans lesquels :
- la figure 1 représente une cascade pour inverseur de poussée ;
- les figures 2a-2c illustrent le procédé de matriçage mis en oeuvre selon l'invention pour fabriquer une partie du produit illustré à la figure 1, et la figure 2d est un détail agrandi de la figure 2c ;
- la figure 3 est un schéma à plus grande échelle illustrant l'orientation du prémix par rapport aux cavités de l'outillage de matriçage des figures 2a-2c ;
- la figure 4 représente une coupe transversale d'une partie du produit semi-fini issu de l'étape illustrée par la figure 2c ;
- la figure 5 représente une portion de roue de compresseur ; et
- la figure 6 est un schéma illustrant l'orientation de couches de fibres unidirectionnelles du prémix dans le cas de la fabrication d'aubes ou ailettes de la portion de roue de compresseur de la figure 5.

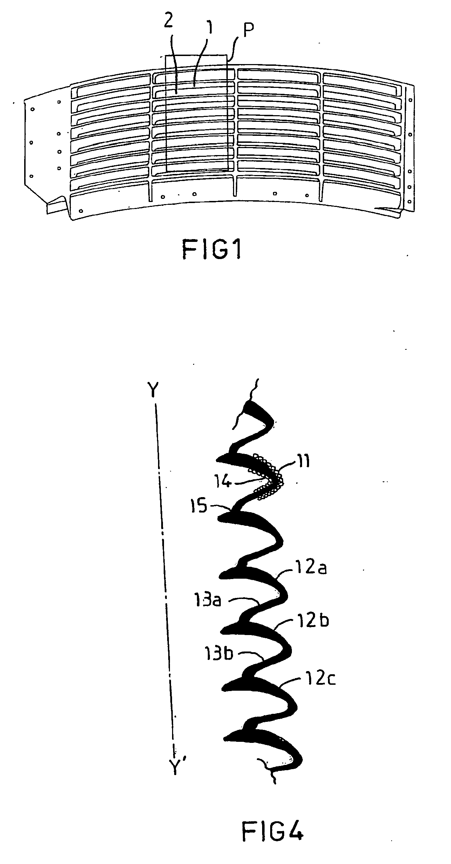

La figure 1 illustre un type de produit, à savoir une cascade pour inverseur de poussée, dont une partie, telle que celle encadrée en P, peut avantageusement être fabriquée selon l'invention. Il est bien entendu cependant qu'en pratique, c'est toute la cascade illustrée à la figure 1 qui est moulée en une seule opération.

Dans la suite, la partie P sera appelée "la pièce" pour ne pas alourdir la description. Comme on le voit, cette pièce comporte une série d'ailettes parallèles 1 ayant chacune un profil aérodynamique et qui sont séparées les unes des autres par un vide 2.

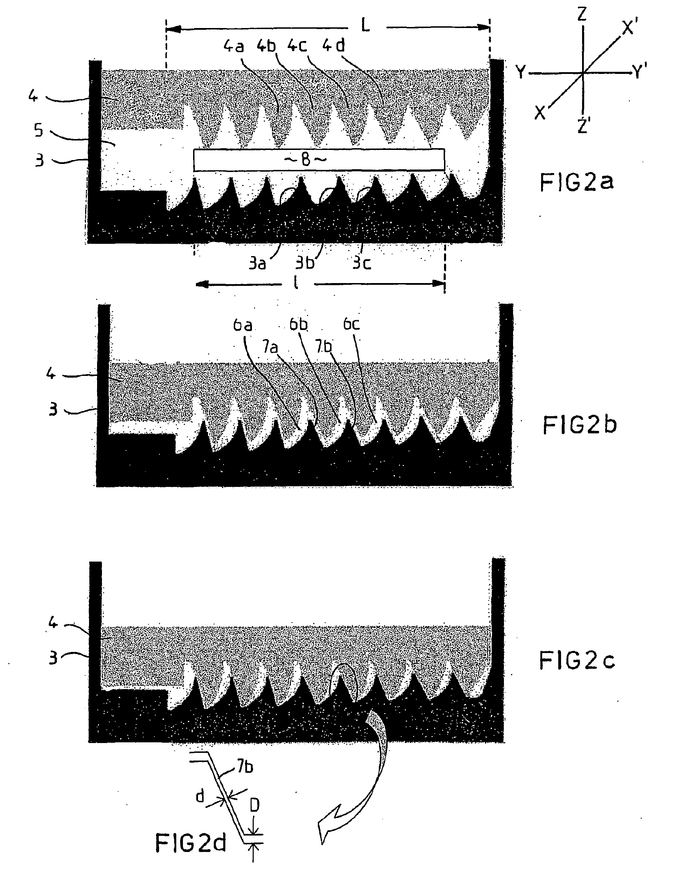

Les figures 2a-2c représentent schématiquement un outillage de matriçage permettant de fabriquer la pièce P illustrée à la figure 1.

Cet outillage est constitué d'une matrice 3 et d'un couvercle 4 monté coulissant verticalement, selon la direction Z-Z' , dans la matrice 3 et définissant avec elle une chambre de compression 5. Les faces en vis-à-vis de la matrice et du couvercle présentent des reliefs, respectivement 3a, 3b, 3c, etc. et 4a, 4b, 4c, 4d, etc., adaptés à s'interpénétrer et qui, lorsqu'ils sont accouplés définissent une série de cavités (figure 2b) telles que 6a, 6b, 6c, etc. Ces cavités ont une grande dimension selon la direction X-X' et une petite section dans le plan Y-Y', Z-Z'. Les cavités 6a, 6b, 6c, etc. communiquent entre elles via des passages 7a, 7b, etc., les faces déterminant lesdits passages n'étant pas jointives même lorsque le couvercle 4 est en bout de course dans la matrice 3 (voir figure 2d).

La forme et la disposition des cavités 6a, 6b, 6c etc. correspondent à celles des ailettes 1 de la pièce P de la figure 1.

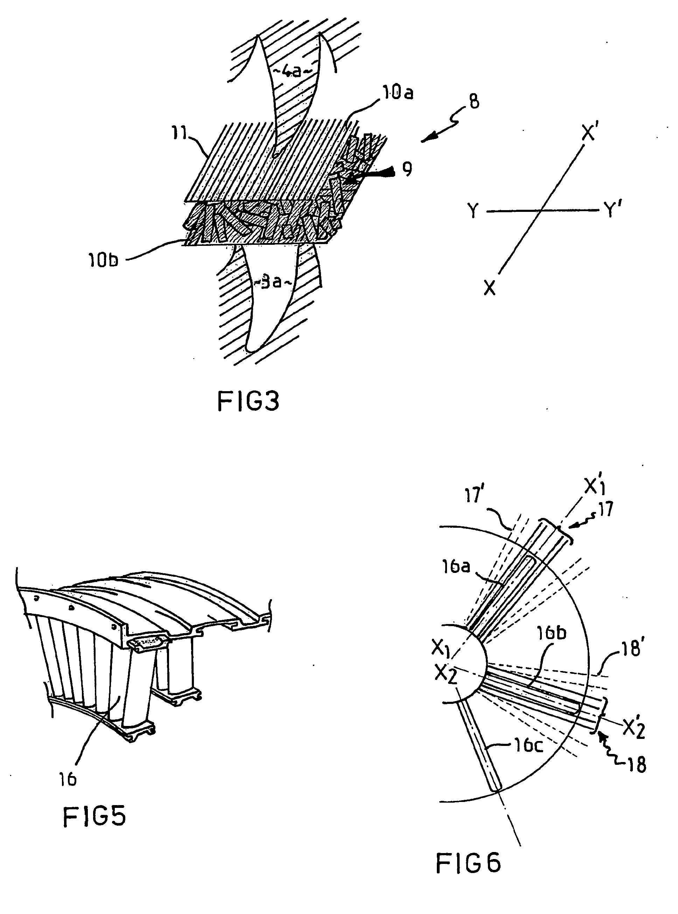

Comme il ressort de la figure 2a, avant matriçage, une plaque de prémix 8 est placée entre la matrice 3 et le couvercle 4. Ce prémix, comme le montre la figure 3, est constitué, dans cet exemple, d'un matériau de remplissage 9 pris en sandwich entre deux couches 10a et 10b de fibres unidirectionnelles et pré-imprégnées d'une résine thermodurcissable. En pratique, chaque couche est, avantageusement, constituée de plusieurs nappes individuelles orientées de même façon et superposées. Le rapport volumique entre fibres continues unidirectionnelles et matériau de remplissage est sensiblement homogène dans tout le prémix. Le prémix 8 est orienté de telle sorte que ses fibres 11 soient parallèles (direction X-X') à la grande dimension des cavités 6a, 6b, 6c, etc., étant entendu que, sous l'effet du matriçage, les fibres 11 ne peuvent s'allonger, mais peuvent s'écarter les unes des autres (direction Y-Y'). Cela permet d'utiliser une plaque de prémix 8 dont la dimension 1 sera sensiblement égale à la dimension L de la zone de l'outillage qui définit l'emprise de la pièce P à obtenir, alors que, par suite de la déformation due au matriçage, la longueur de la surface en dents de scie résultante sera considérablement plus grande (voir figure 4) : les fibres 11 se seront écartées les unes des autres et, si les couches de fibres sont, chacune, constituées de plusieurs nappes superposées comme il est dit plus haut, des fibres d'une nappe pourront venir se loger entre les fibres écartées d'une autre nappe pour maintenir la continuité de la couche en dépit de son étalement. Bien que la figure 3 montre un prémix 8 composé d'un simple sandwich couche de fibres unidirectionnelles/matériau de remplissage/couche de fibres unidirectionnelles, une ou plusieurs couches de fibres unidirectionnelles pourraient être prises entre deux couches de matériau de remplissage et/ou plusieurs sandwiches pourraient être superposés.

Si l'on en revient aux figures 2a-2c, la plaque de prémix 8 est donc placée dans l'outillage où elle subit une phase de mise en température. Le couvercle 4 est ensuite abaissé en créant une pression sur le prémix qui est contraint d'épouser la forme des cavités 6a, 6b, 6c, etc. et des passages 7a, 7b, etc. Compte tenu de la minceur des passages une fois le couvercle en fin de course (voir figure 2d où, par exemple, d = 3 à 5 dixièmes de mm, D = 1 mm), le prémix qui se trouve au niveau des passages est contraint de fluer vers les cavités adjacentes, mais ce faisant il ne flue pas de manière homogène : c'est le matériau de remplissage 9 qui s'échappe, les fibres 11 restant, elles, piégées dans les passages. Il s'ensuit une redistribution du matériau de remplissage, avec pour résultat que, par rapport à la composition de départ, la composition qui se trouve dans les cavités 6a, 6b, 6c, etc. est plus riche en matériau de remplissage 9 que le prémix de départ, tandis que la composition qui se trouve dans les passages 7a, 7b, etc. n'est pratiquement plus constituée que de fibres continues 11.

Le produit semi-fini issu de l'étape d) du matriçage se présente comme le montre la coupe transversale de la figure 4.

On voit une succession d'éléments parallèles 12a, 12b, 12c, etc. qui correspondent aux cavités 6a, 6b, 6c, etc. et qui sont réunis par des fonds de mailles 13a, 13b, etc. qui correspondent aux passages 7a, 7b, etc. Les fibres parallèles 11 des couches 10a, 10b incluses dans le produit ont été représentées sur une partie de cette figure, selon un nombre, une taille et une position saillante qui n'ont rien de réaliste. Il s'agit seulement de montrer l'orientation des fibres par rapport à celle des éléments 12a, 12b, 12c, etc.

L'étape ultérieure consiste à éliminer les fonds de maille, tels que 13a, 13b, etc. en les coupant aux niveaux 14 et 15, soit au jet d'eau abrasif, soit par usinage.

Les éléments 12a, 12b, 12c, etc. se présentent alors comme les ailettes 1 de la pièce P de la figure 1.

Le procédé selon l'invention est applicable à la fabrication d'autres séries d'éléments juxtaposés et séparés par un espace, par exemple d'éléments rayonnants comme les ailettes 16 d'une roue de compresseur, voir figure 5.

Dans ce cas, il est nécessaire d'avoir recours à un prémix comportant plusieurs couches, orientées différemment, de fibres continues unidirectionnelles pour qu'après matriçage, on obtienne une pièce dont les éléments 16 comportent, chacun, des fibres orientées selon leur grande dimension.

Comme il ressort de la figure 6, où quelques ailettes 16a, 16b, 16c de la roue de compresseur ont été schématisées, le prémix utilisé comporte plusieurs couches de fibres continues unidirectionnelles, orientées différemment comme cela est illustré par les fibres 17 et 18. Plus précisément, les ailettes 16a, 16b ont leur grande dimension orientée, respectivement, selon les axes X₁-X₁' et X₂-X₂' et les couches 17 et 18 ont, avant matriçage, leurs fibres orientées parallèlement à ces axes. Pour la compréhension du dessin, dans l'illustration, les couches de fibres unidirectionnelles s'étendent au-delà de l'extrémité des ailettes mais il est bien entendu, qu'en réalité, le prémix dans lesquelles ces couches sont incluses ne débordent pas ainsi de l'outil de matriçage. Sous l'effet du matriçage, les fibres 17 et 18 s'écartent les unes des autres comme indiqué en pointillés en 17', 18' en s'adaptant à la forme des ailettes et en formant, entre celles-ci, des fonds de maille. Pour le reste, ce qui a été dit plus haut à propos des ailettes parallèles s'applique mutatis mutandis aux ailettes rayonnantes.

## Revendications

1. Procédé de fabrication d'une série d'éléments (1;12a-12c;16;16a-16c) juxtaposés et séparés les uns des autres sur au moins une partie de leur longueur, **caractérisé en ce qu'**il consiste :
a) à utiliser, comme matière première, un prémix (8) associant, selon un rapport volumique sensiblement homogène, d'une part, au moins une couche (10a,10b;17,18) de fibres continues unidirectionnelles (11) et pré-imprégnées d'une résine et, d'autre part, un matériau de remplissage (9),
b) à utiliser, comme équipement, un outillage de matriçage comportant une matrice (3) et un couvercle (4) définissant ensemble une série de cavités (6a-6c) dont la forme, qui présente une grande dimension (directions X-X'; X₁-X₁',X₂-X₂') et une petite section dans le plan (Y,Y'-Z,Z') perpendiculaire à ladite grande dimension, correspond à celle des éléments (1;12a-12c;16;16a-16c) attendus, lesdites cavités (6a-6c) communiquant entre elles via un passage (7a,7b) ménagé entre chaque paire de cavités (6a-6c), lesdits passages (7a,7b) étant d'un volume tel que, lors du matriçage, une partie majeure du prémix (8) qui se trouve au niveau des passages (7a,7b), est contrainte de fluer vers les cavités (6a-6c),
c) à disposer ledit prémix (8) dans ledit outillage de telle sorte qu'il affecte ladite série de cavités (6a-6c) et en l'orientant de façon qu'au droit de chaque cavité, se trouvent des fibres s'étendant selon ladite grande dimension (directions X-X'; X₁-X₁',X₂-X₂') et appartenant à ladite au moins une couche (10a,10b;17,18),
d) à matricer ledit prémix (8) ainsi disposé, avec pour résultat l'obtention d'une série d'éléments (1;12a-12c;16;16a-16c) juxtaposés, enrichis en matériau de remplissage (9) par comparaison avec le rapport volumique du prémix (8) de départ, lesquels éléments (1;12a-12c;16;16a-16c) sont reliés les uns aux autres par des voiles de matière (13a,13b), dits fonds de maille, qui correspondent auxdits passages (7a,7b) et qui sont appauvris en matériau de remplissage (9) par comparaison avec le rapport volumique du prémix (8) de départ, et
e) à éliminer lesdits fonds de maille (13a,13b).

2. Procédé selon la revendication 1 appliqué à la fabrication d'une série d'éléments (1;12a-12c) juxtaposés parallèlement, **caractérisé en ce qu'**il consiste à utiliser un prémix (8) incorporant plusieurs couches (10a,10b) de fibres continues unidirectionnelles (11), lesdites couches (10a,10b) faisant entre elles un angle sensiblement nul et **en ce que**, dans l'étape c), le prémix (8) est orienté de telle sorte que les fibres desdites couches (10a,10b) soient sensiblement parallèles à la grande dimension (X-X') des cavités (6a-6c) de ladite série de cavités (6a-6c).

3. Procédé selon la revendication 1 appliqué à la fabrication d'une série d'éléments (16;16a-16c) rayonnants juxtaposés, **caractérisé en ce qu'**il consiste à utiliser un prémix (8) incorporant plusieurs couches (17,18) de fibres continues unidirectionnelles (11), au moins certaines desdites couches (17,18) faisant entre elles un angle tel que, dans l'étape (c), il se trouve, au droit de chaque cavité, des fibres s'étendant selon la grande dimension (directions X₁-X₁',X₂-X₂') de ladite cavité et appartenant à l'une au moins desdites couches (17,18).

4. Procédé selon l'une quelconque des revendications 1 à 3, **caractérisé en ce que** les fibres de la ou desdites couches (10a,10b;17,18) de fibres continues unidirectionnelles (11) sont aptes à s'écarter les unes des autres sous l'effet du matriçage.

5. Procédé selon la revendication 4, **caractérisé en ce qu'**il consiste à utiliser un prémix (8) dans lequel la ou lesdites couches (10a,10b;17,18) de fibres continues unidirectionnelles (11) sont chacune constituées de plusieurs nappes superposées de telles fibres orientées dans la même direction et à contraindre, sous l'effet du matriçage, les fibres (11) d'au moins une desdites nappes à s'intercaler entre les fibres écartées d'une autre desdites nappes.

6. Procédé selon l'une quelconque des revendications 1 à 5, **caractérisé en ce que** la ou lesdites couches (10a,10b;17,18) de fibres continues unidirectionnelles (11) sont réalisées à partir d'une ou plusieurs nappes ayant individuellement une épaisseur comprise entre 1/10 mm et 1 mm.

7. Procédé selon l'une quelconque des revendications 1 à 6, **caractérisé en ce que** ledit matériau de remplissage (9) se présente sous la forme de granulés, de mats, de résine chargée, de fragments d'au moins une nappe de fibres unidirectionnelles pré-imprégnées, ou d'une combinaison de ceux-ci.

8. Procédé selon la revendication 7, **caractérisé en ce que** lesdits fragments sont issus d'une nappe identique à une nappe constitutive de ladite au moins une couche (10a,10b;17,18) de fibres continues unidirectionnelles (11).

9. Procédé selon la revendication 7, **caractérisé en ce que** lesdits fragments sont issus d'une nappe qui diffère de la ou des nappes constitutives de ladite au moins une couche (10a,10b;17,18) de fibres continues unidirectionnelles (11) par sa composition qualitative et/ou quantitative et/ou par son épaisseur.

10. Procédé selon l'une quelconque des revendications 1 à 9, **caractérisé en ce que**, avant matriçage, ledit prémix (8) se présente sous la forme d'une plaque ayant une épaisseur sensiblement constante (direction Z-Z') et dont les dimensions, dans le plan (X,X'-Y,Y') perpendiculaire à ladite épaisseur, sont sensiblement égales aux dimensions, dans ce même plan, de la zone de l'outillage définissant l'emprise de la série d'éléments (P) à obtenir.

11. Procédé selon l'une quelconque des revendications 1 à 10, **caractérisé en ce que** lesdits fonds de maille (13a,13b) sont éliminés par découpe au jet d'eau.

12. Procédé selon l'une quelconque des revendications 1 à 10, **caractérisé en ce que** lesdits fonds de maille (13a,13b) sont éliminés par usinage.

13. Produit semi-fini comprenant une série d'éléments juxtaposés reliés les uns aux autres par des voiles de matière, dits fonds de maille, lesdits éléments ayant une grande dimension et une petite section dans un plan perpendiculaire à ladite grande dimension, constitué, d'une part, de fibres continues unidirectionnelles préimprégnées d'une résine, lesquelles fibres s'étendent sensiblement selon ladite grande dimension et, d'autre part, d'un matériau de remplissage, lesdits éléments étant plus riches en matériau de remplissage que lesdits fonds de maille, lesdits fonds de maille (13a,13b) ayant une épaisseur comprise entre environ 3/10 mm et 1 mm.

14. Utilisation du procédé selon l'une quelconque des revendications 1 à 12, pour la fabrication d'une série d' éléments (1;12a-12c;16;16a-16c) ayantchacun un profil aérodynamique.

## Claims

1. A process for manufacturing a series of juxtaposed elements (1;12a-12c;16;16a-16c) separated from one another over at least part of their length, **characterized in that** it consists:
a) in using, as raw material, a premix (8) combining, in a substantially homogeneous volume ratio, on the one hand, at least one layer (10a,10b;17,18) of resin-preimpregnated unidirectional continuous fibers (11) and, on the other hand, a fill material (9);
b) in using, as equipment, a die-forming tool comprising a die (3) and a cover (4) defining together a series of cavities (6a-6c), the shape of which, which has a long dimension (X-X';X₁-X₁',X₂-X₂' directions) and a small cross section in the (Y,Y',Z,Z') plane perpendicular to said long dimension, corresponds to that of the expected elements (1;12a-12c;16;16a-16c), said cavities (6a-6c) communicating with one another via a passage (7a,7b) provided between each pair of cavities (6a-6c), said passages (7a,7b) having a volume such that, during the die-forming, most of the premix (8) in the passages (7a,7b) is forced to flow into the cavities (6a-6c);
c) in placing said premix (8) in said tool in such a way that it affects said series of cavities (6a-6c) and, by orienting it so that, in line with each cavity, there are fibers that extend along said long dimension (X-X';X₁-X₁',X₂-X₂' directions) and belonging to said at least one layer (10a,10b;17,18);
d) in die-forming said premix (8) thus placed, resulting in the formation of a series of juxtaposed elements (1;12a-12c;16;16a-16c) that are enriched with fill material (9) compared with the volume ratio of the initial premix (8), which elements (1;12a-12c;16;16a-16c) are joined together by webs of material (13a,13b), called here "mesh grounds", which correspond to said passages (7a,7b) and are depleted in fill material (9) compared with the volume ratio of the initial premix (8); and
e) in eliminating said mesh grounds (13a,13b).

2. The process as claimed in claim 1, applied to the manufacture of a series of parallel juxtaposed elements (1;12a-12c), **characterized in that** it consists in using a premix (8) incorporating several layers (10a,10b) of unidirectional continuous fibers (11), said layers (10a,10b) making between them a substantially zero angle, and **in that**, in step c), the premix (8) is oriented in such a way that the fibers of said layers (10a,10b) are substantially parallel to the long dimension (X-X') of the cavities (6a-6c) of said series of cavities (6a-6c).

3. The process as claimed in claim 1, applied to the manufacture of a series of juxtaposed radiating elements (16;16a-16c), **characterized in that** it consists in using a premix (8) incorporating several layers (17,18) of unidirectional continuous fibers (11), at least some of said layers (17,18) making between them an angle such that, in step c), there are, in line with each cavity, fibers extending along the long dimension (X₁-X₁',X₂-X₂' directions) of said cavity and belonging to at least one of said layers (17,18).

4. The process as claimed in any one of claims 1 to 3, **characterized in that** the fibers of said layer or layers (10a,10b;17,18) of unidirectional continuous fibers (11) are capable of moving away from one another under the effect of the die-forming.

5. The process as claimed in claim 4, **characterized in that** it consists in using a premix (8) in which said layer or layers (10a,10b;17,18) of unidirectional continuous fibers (11) each consist of several superposed plies of such fibers oriented in the same direction and in constraining, owing to the effect of the die-forming, the fibers (11) of at least one of said plies to be accommodated between the splayed-out fibers of another of said plies.

6. The process as claimed in any one of claims 1 to 5, **characterized in that** said layer or layers (10a,10b;17,18) of unidirectional continuous fibers (11) are produced from one or more plies having, individually, a thickness of between 1/10 mm and 1 mm.

7. The process as claimed in any one of claims 1 to 6, **characterized in that** said fill material (9) is in the form of granules, mats, filled resin or fragments of at least one ply of unidirectional preimpregnated fibers, or of a combination of them.

8. The process as claimed in claim 7, **characterized in that** said fragments come from a ply identical to a constituent ply of said at least one layer (10a,10b;17,18) of unidirectional continuous fibers (11).

9. The process as claimed in claim 7, **characterized in that** said fragments come from a ply that differs from the constituent ply or plies of said at least one layer (10a,10b;17,18) of unidirectional continuous fibers (11) by its qualitative and/or quantitative composition and/or by its thickness.

10. The process as claimed in any one of claims 1 to 9, **characterized in that**, before the die-forming, said premix (8) is in the form of a sheet having a substantially constant thickness (in the Z-Z' direction) and the dimensions of which in the (X,X',Y,Y') plane perpendicular to said thickness are substantially equal to the dimensions, in this same plane, of the region of the tool defining the coverage of the series of elements (P) to be obtained.

11. The process as claimed in any one of claims 1 to 10, **characterized in that** said mesh grounds (13a,13b) are removed by water jet cutting.

12. The process as claimed in any one of claims 1 to 10, **characterized in that** said mesh grounds (13a,13b) are removed by machining.

13. A semifinished product comprising a series of juxtaposed elements joined together by webs of material, called here mesh grounds, said elements having a long dimension and a small cross section in the plane perpendicular to said long dimension, said product being made, on the one hand, of resin-preimpregnated unidirectional continuous fibers, which fibers extend substantially along said long dimension and, on the other hand, a fill material, said elements being enriched with fill material compared with the mesh grounds, said mesh grounds (13a,13b) having a thickness of about 3/10 mm and 1 mm.

14. Use of the process according to any one of claims 1 to 12, for the manufacture of a series of elements (1;12a-12c;16;16a-16c) each having an aerodynamic profile.

## Patentansprüche

1. Verfahren zur Herstellung einer Reihe von nebeneinander angeordneten und auf mindestens einem Teil ihrer Länge voneinander getrennten Elementen (1; 12a-12c; 16; 16a-16c), **dadurch gekennzeichnet, dass** es darin besteht, dass:
a) als Ausgangsmaterial eine Vormischung (8) verwendet wird, die in einem im Wesentlichen homogenen Volumenverhältnis einerseits mindestens eine Schicht (10a, 10b; 17, 18) von kontinuierlichen, in einer Richtung gerichteten und mit einem Harz vorgetränkten Fasern (11) und andererseits ein Füllmaterial (9) kombiniert,
b) als Anlage ein Gesenkformwerkzeug verwendet wird, das ein Gesenk (3) und einen Deckel (4) umfasst, die zusammen eine Reihe von Hohlräumen (6a-6c) bilden, deren Form, die eine große Abmessung (Richtungen X-X'; X₁-X₁', X₂-X₂') und einen kleinen Schnitt in der zu dieser großen Abmessung senkrechten Ebene (Y, Y' - Z, Z') aufweist, derjenigen der erwarteten Elemente (1; 12a-12c; 16; 16a-16c) entspricht, wobei die Hohlräume (6a-6c) miteinander über einen Durchgang (7a, 7b) in Verbindung sind, der zwischen jedem Paar von Hohlräumen (6a-6c) vorgesehen ist, wobei die Durchgänge (7a, 7b) ein solches Volumen besitzen, dass bei dem Gesenkformen ein größerer Teil der Vormischung (8), der sich auf Höhe der Durchgänge (7a, 7b) befindet, gezwungen wird, zu den Hohlräumen (6a-6c) zu fließen,
c) die Vormischung (8) in dem Werkzeug so angeordnet wird, dass sie der Reihe von Hohlräumen (6a-6c) zugewiesen wird und indem es so gerichtet wird, dass auf Höhe jedes Hohlraums sich Fasern befinden, die sich gemäß der großen Abmessung (Richtungen X-X' ; X₁-X₁', X₂-X₂') erstrecken und zu der mindestens einen Schicht (10a, 10b 17, 18) gehören,
d) die so angeordnete Vormischung (8) gesenkgeformt wird, was zum Ergebnis hat, dass eine Reihe von nebeneinander angeordneten Elementen (1; 12a-12c; 16; 16a-16c) erhalten wird, die im Vergleich zu dem Volumenverhältnis der Ausgangsvormischung (8) mit Füllmaterial (9) angereichert sind, wobei diese Elemente (1; 12a-12c; 16; 16a-16c) miteinander durch Materialwände (13a, 13b), Maschenböden genannt, verbunden sind, die den Durchgängen (7a, 7b) entsprechen und die im Vergleich zu dem Volumenverhältnis der Ausgangsvormischung (8) an Füllmaterial arm sind, und
e)diese Maschenböden (13a, 13b) entfernt werden.

2. Verfahren nach Anspruch 1, angewandt auf die Herstellung einer Reihe von parallel nebeneinander angeordneten Elementen (1; 12a-12c), **dadurch gekennzeichnet, dass** es darin besteht, dass eine Vormischung (8) verwendet wird, die mehrere Schichten (10a, 10b) von kontinuierlichen, in einer Richtung gerichteten Fasern (11) enthält, wobei diese Schichten (10a, 10b) miteinander einen Winkel von im Wesentlichen null bilden, und dass im Schritt c) die Vormischung (8) so gerichtet wird, dass die Fasern dieser Schichten (10a, 10b) zur großen Abmessung (X-X') der Hohlräume (6a-6c) dieser Reihe von Hohlräumen (6a-6c) im Wesentlichen parallel sind.

3. Verfahren nach Anspruch 1, angewandt auf die Herstellung einer Reihe von strahlenförmig nebeneinander angeordneten Elementen (16; 16a-16c), **dadurch gekennzeichnet, dass** es darin besteht, dass eine Vormischung (8) verwendet wird, die mehrere Schichten (17, 18) von kontinuierlichen, in einer Richtung gerichteten Fasern (11) enthält, wobei mindestens manche dieser Schichten (17, 18) miteinander einen solchen Winkel bilden, dass sich im Schritt c) auf Höhe jedes Hohlraums Fasern befinden, die sich gemäß der großen Abmessung (Richtungen X₁-X₁', X₂-X₂') des Hohlraums erstrekken und zu mindestens einer der Schichten (17, 18) gehören.

4. Verfahren nach einem der Ansprüche 1 bis 3, **dadurch gekennzeichnet, dass** die Fasern der Schicht bzw. Schichten (10a, 10b; 17, 18) von kontinuierlichen, in einer Richtung gerichteten Fasern (11) in der Lage sind, sich unter der Wirkung des Gesenkformens voneinander zu entfernen.

5. Verfahren nach Anspruch 4, **dadurch gekennzeichnet, dass** es darin besteht, dass eine Vormischung (8) verwendet wird, in der die Schicht bzw. Schichten (10a, 10b; 17, 18) von kontinuierlichen, in einer Richtung gerichteten Fasern (11) jeweils aus mehreren übereinandergelegten Bahnen von solchen in derselben Richtung gerichteten Fasern bestehen, und die Fasern (11) mindestens einer dieser Bahnen unter der Wirkung des Gesenkformens gezwungen werden, zwischen die voneinander entfernten Fasern einer anderen dieser Bahnen zu treten.

6. Verfahren nach einem der Ansprüche 1 bis 5, **dadurch gekennzeichnet, dass** die Schicht bzw. Schichten (10a, 10b; 17, 18) von kontinuierlichen, in einer Richtung gerichteten Fasern (11) aus einer oder mehreren Bahnen hergestellt sind, die einzeln eine Dicke zwischen 1/10 mm und 1 mm aufweisen.

7. Verfahren nach einem der Ansprüche 1 bis 6, **dadurch gekennzeichnet, dass** das Füllmaterial (9) in der Form von Granulat, Matten, chargiertem Harz, Fragmenten von mindestens einer Bahn von vorgetränkten, in einer Richtung gerichteten Fasern oder einer Kombination von diesen vorliegt.

8. Verfahren nach Anspruch 7, **dadurch gekennzeichnet, dass** die Fragmente von einer Bahn stammen, die mit einer Bahn identisch ist, die diese mindestens eine Schicht(10a, 10b; 17, 18) von kontinuierlichen, in einer Richtung gerichteten Fasern bildet.

9. Verfahren nach Anspruch 7, **dadurch gekennzeichnet, dass** die Fragmente von einer Bahn stammen, die sich von der oder den Bahnen, die diese mindestens eine Schicht (10a, 10b; 17, 18) von kontinuierlichen, in einer Richtung gerichteten Fasern (11) bilden, durch ihre qualitative und/oder quantitative Zusammensetzung und/oder durch ihre Dicke unterscheidet.

10. Verfahren nach einem der Ansprüche 1 bis 9, **dadurch gekennzeichnet, dass** die Vormischung (8) vor dem Gesenkformen in der Form einer Platte vorliegt, die eine im Wesentlichen konstante Dicke (Richtung Z-Z') besitzt und deren Abmessungen in der zu dieser Dicke senkrechten Ebene (X, X' - Y, Y') im Wesentlichen gleich den Abmessungen der Zone des Werkzeugs, die die Weite der herzustellenden Reihe von Elementen (P) definiert, in derselben Ebene ist.

11. Verfahren nach einem der Ansprüche 1 bis 10, **dadurch gekennzeichnet, dass** die Maschenböden (13a, 13b) durch Wasserstrahlschneiden entfernt werden.

12. Verfahren nach einem der Ansprüche 1 bis 10, **dadurch gekennzeichnet, dass** die Maschenböden (13a, 13b) durch Bearbeitung entfernt werden.

13. Halbfertigprodukt, umfassend eine Reihe von nebeneinander angeordneten Elementen, die miteinander durch Materialwände, Maschenböden genannt, verbunden sind, wobei diese Elemente eine große Abmessung und eine kleine Abmessung in einer zur großen Abmessung senkrechten Ebene aufweisen, bestehend einerseits aus mit einem Harz vorgetränkten kontinuierlichen, in einer Richtung gerichteten Fasern, die sich im Wesentlichen gemäß dieser großen Abmessung erstrecken, und andererseits aus einem Füllmaterial, wobei die Elemente an Füllmaterial reicher als die Maschenböden sind, wobei die Maschenböden (13a, 13b) eine Dicke zwischen etwa 3/10 mm und 1 mm aufweisen.

14. Verwendung des Verfahrens nach einem der Ansprüche 1 bis 12 für die Herstellung einer Reihe von Elementen (1; 12a-12c; 16; 16a-16c), deren jedes ein ärodynamisches Profil besitzt.
